# EUROPEAN PATENT APPLICATION

(11) **EP 4 756 578 A1**
(43) Date of publication of application: **10.06.2026**
(21) Application number: 24850504.2
(22) Date of filing: 18.03.2024
(51) Int. Cl.: G06F 3/01

(54) **OPERATION METHOD, ELECTRONIC DEVICE, SMART RING, CONTROL SYSTEM, AND STORAGE MEDIUM**

(30) Priority: 07.08.2023 CN 202310993412
(71) Applicant: ZTE Corporation, Shenzhen, Guangdong 518057 (CN)
(72) Inventor: CHEN, Jianjiang, Shenzhen, Guangdong 518057 (CN); GAO, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/082284
(87) International publication number: WO 2025/030845

(57) **Abstract**

An operation method, an electronic device, a smart ring, a control system, and a storage medium. The operation method includes: receiving finger pinch data from a smart ring, where the finger pinch data includes pinch data in a case where a first finger wearing the smart ring of a user pinches with a second finger of the user; determining a pinch gesture of the user based on the finger pinch data; and performing an operation instruction corresponding to the pinch gesture, in response to the pinch gesture.

## Description

The present disclosure claims priority to the Chinese Patent Application No. 202310993412.9, filed on August 7, 2023, the entire content of which is incorporated herein by reference.

### TECHNICAL FIELD

Embodiments of the present disclosure relate to the field of communication technologies, and in particular, to an operation method, an electronic device, a smart ring, a control system, and a storage medium.

### BACKGROUND

With the continuous upgrade of electronic devices, in daily life, the usage frequency of electronic devices is becoming higher and higher. For example, users may make calls and watch multimedia videos via electronic devices, and so on.

### SUMMARY

In a first aspect, an operation method is provided, and the operation method includes: receiving finger pinch data from a smart ring, wherein the finger pinch data comprises pinch data in a case where a first finger wearing the smart ring of a user pinches with a second finger of the user; determining a pinch gesture of the user based on the finger pinch data; and performing an operation instruction corresponding to the pinch gesture, in response to the pinch gesture.

In a second aspect, an operation method is provided, and applied to a smart ring, and a first finger of a user is selected as a finger wearing the smart ring. The operation method includes: collecting finger pinch data of a pinch operation between the first finger and a second finger of the user; and sending the finger pinch data to an electronic device, wherein the finger pinch data corresponds to a predetermined operation instruction, and the electronic device performs a preset operation in response to the operation instruction.

In a third aspect, a control system is provided, the control system includes an electronic device and a smart ring, the smart ring is worn on a first finger of a user, and the electronic device may be configured to implement the operation method in the above first aspect, and the smart ring may be configured to implement the operation method in the above second aspect.

In a fourth aspect, an electronic device is provided, the electronic device includes a processor and a communication interface, and the processor and the communication interface support the electronic device to perform the operation method in the first aspect.

According to a fifth aspect, a smart ring is provided, and the smart ring is provided with a sensor, a processor, and a communication interface. The sensor is configured to collect finger pinch data between a first finger wearing the smart ring of a user and a second finger of the user. The processor is configured to send the finger pinch data to an electronic device via the communication interface.

In a sixth aspect, a computer-readable storage medium is provided, the computer-readable storage medium stores computer instructions or a program, and when the computer instructions or the program run on a computer, the computer may perform the operation method according to any design in the first aspect or the second aspect described above.

In a seventh aspect, a computer program product containing instructions is provided, and when the instructions run on a computer, the computer may perform the operation method according to any design in the first aspect or the second aspect described above.

### BRIEF DESCRIPTION OF THE DRAWINGS

FIG. 1 is a schematic diagram of an electronic device according to the embodiments of the present disclosure.
FIG. 2 is a structural schematic diagram of a control system according to the embodiments of the present disclosure.
FIG. 3 is a structural schematic diagram of another control system according to the embodiments of the present disclosure.
FIG. 4 is a flowchart diagram of an operation method according to the embodiments of the present disclosure.
FIG. 5A is a schematic diagram of a rotation angle when a first finger pinches with different fingers according to the embodiments of the present disclosure.
FIG. 5B is a schematic diagram of another rotation angle when a first finger pinches with different fingers according to the embodiments of the present disclosure.
FIG. 6A is a schematic diagram of an angle between a smart ring and a gravity line when a thumb pinches with an index finger and a little finger according to the embodiments of the present disclosure.
FIG. 6B is a schematic diagram of another angle between a smart ring and a gravity line when a thumb pinches with an index finger and a little finger according to the embodiments of the present disclosure.
FIG. 6C is a schematic diagram of yet another angle between a smart ring and a gravity line when a thumb pinches with an index finger and a little finger according to the embodiments of the present disclosure.
FIG. 7A is a schematic diagram of a pinch gesture controlling a character input according to the embodiments of the present disclosure.
FIG. 7B is another schematic diagram of a pinch gesture controlling a character input according to the embodiments of the present disclosure.
FIG. 8 is a schematic diagram of a call interface according to the embodiments of the present disclosure.
FIG. 9 is a schematic diagram of a pinch gesture controlling an electronic device to start a call mode according to the embodiments of the present disclosure.
FIG. 10 is a schematic diagram of a pinch gesture controlling an electronic device to end a call mode of according to the embodiments of the present disclosure.
FIG. 11 is a structural schematic diagram of a control apparatus according to the embodiments of the present disclosure.
FIG. 12 is a structural schematic diagram of another control apparatus according to the embodiments of the present disclosure.
FIG. 13 is a structural schematic diagram of yet another control apparatus according to the embodiments of the present disclosure.

### DETAILED DESCRIPTION

To enable those skilled in the art to better understand the technical solutions of the embodiments of the present disclosure, a clear and complete description of the technical solutions in the embodiments of the present disclosure will be given below with reference to the drawings in the embodiments of the present disclosure.

In the description of the present disclosure, unless otherwise specified, "/" indicates the meaning of "or", for example, A/B may indicate A or B. The "and/or" in this document is merely a description of an association relationship between associated objects, indicating that three relationships may exist, for example, A and/or B may indicate: only A, only B, and both A and B. Furthermore, "at least one" means one or more, and "multiple/plurality of" means two or more. Terms such as "first" and "second", etc., do not limit the number and an execution order, and the terms such as "first" and "second", etc., do not necessarily mean that they are different. "at least one of (the following items)" or a similar expression means any combination of these items, including any combination of a single item or multiple items. For example, at least one of a, b, or c may indicate: a, b, c, a and b, a and c, b and c, or a, b, and c, where a, b, and c may be single or multiple.

It should be noted that in the present disclosure, terms such as "exemplarily" or "for example/such as/e.g." are used to provide examples, illustrations, or explanations. Any embodiment or design solution described as "exemplarily" or "for example/such as/e.g." in the present disclosure should not be interpreted as being more preferred or advantageous over other embodiments or design solutions. Rather, using terms such as "exemplarily" or "for example/such as/e.g." is intended to present related concepts in a specific manner.

In the embodiments of the present disclosure, "indication" or variants thereof may include direct indication and indirect indication. For example, taking indication information described below as an example, the indication information may directly carry information A itself or its index, to achieve the purpose of directly indicating information A. Alternatively, the indication information may carry information B that has an association relationship with information A, thereby achieving the purpose of indirectly indicating information A while indicating information B.

With the continuous development of electronic technologies, electronic devices such as VR (Virtual Reality)/AR (Augmented Reality) devices, smartphones, and tablet computers have been widely applied. Usually, when a user operates an electronic device, the user generally operates the electronic device directly with a finger. However, when the user operates on the electronic device with a finger for an excessively long time, it may cause discomfort to the user's hand and reduce the user experience.

Usually, the user may directly perform a control operation on the electronic device using a finger. For example, it controls the playback of multimedia data of the electronic device, and so on.

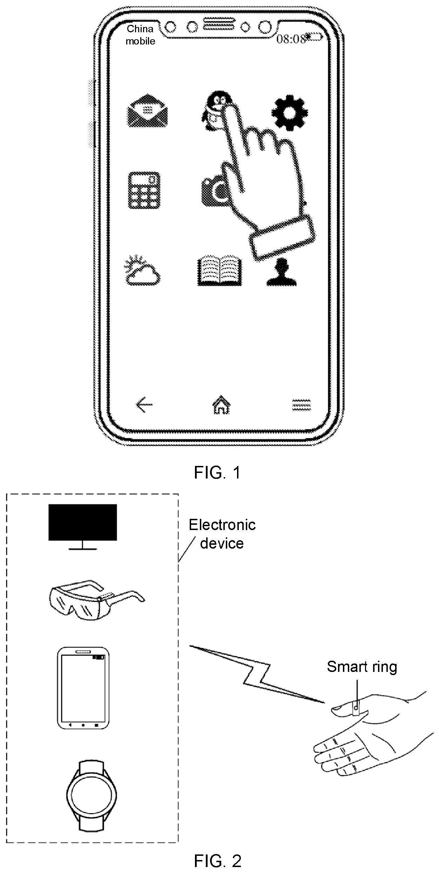

For example, taking the electronic device as a terminal device as an example, as shown in FIG. 1, the user needs to operate on a display screen of the electronic device or press a functional button of the electronic device with a finger, so as to control the electronic device. For example, when the electronic device is playing multimedia data, to control the volume of the multimedia data, the user may press a volume key of the electronic device or perform a slide operation on a playback interface.

However, in some scenarios, it is inconvenient for the user to directly control the electronic device with a finger, for example, when the user is in an environment with many people. Therefore, how to provide convenience for a user to control an electronic device has become a technical problem that needs to be solved urgently.

In some embodiments, the electronic device may be controlled based on a recognition result of a human eye or a gesture of the user. For example, in an AR/VR environment, the device may determine a target object to be controlled, by detecting the focus of human eyes. As another example, the electronic device may capture a gesture of the user by a camera, and determine the gesture of the user by recognizing the captured image, and then perform a corresponding operation based on the gesture of the user. However, the recognition process of that method is relatively slow. Additionally, the camera is susceptible to ambient light, and the captured image is also related to an elevation angle of the camera, and meanwhile, there are also problems such as a low recognition rate for image recognition and the need for a professional handheld device (which has poor universality), etc.

In view of this, the embodiments of the present disclosure provide an operation method, in which a smart ring collects finger pinch data between a finger and another finger, and sends the collected finger pinch data to an electronic device; the electronic device may determine a pinch gesture of the fingers based on the finger pinch data; the electronic device may perform an operation instruction corresponding to the pinch gesture. Since pinch gestures corresponding to that a finger wearing the smart ring pinches with different fingers, are different, the electronic device may perform a corresponding operation instruction based on the pinch gesture of the user. That is, the user may control the electronic device or an object in the electronic device by a pinch of the finger, without directly contacting the electronic device, thereby improving the user experience when using the electronic device.

Exemplarily, FIG. 2 shows a structural schematic diagram of a control system according to the embodiments of the present disclosure. The control system may include one or more smart rings (only one smart ring is shown in the figure) and an electronic device. Different smart rings may be worn on different fingers of the user. The smart ring and the electronic device may be connected via wireless communication, for example, via Bluetooth, Wireless Fidelity (WiFi), or the like.

The electronic device is configured to determine a pinch gesture of the finger based on finger pinch data collected by the smart ring, and perform an operation instruction corresponding to the pinch gesture. The electronic device may also be referred to as a terminal, a user equipment (UE), a mobile station, a mobile terminal, and the like. The electronic device may be a mobile phone, a tablet computer, a projector, a smart TV, a smart cockpit, a computer with a wireless transceiver function, a virtual reality terminal device, an augmented reality terminal device, a wireless terminal in industrial control, a wireless terminal in unmanned driving, a wireless terminal in remote surgery, a wireless terminal in transportation safety, a wireless terminal in a smart city, a wireless terminal in a smart home, and so on. The embodiments of the present disclosure do not limit the device form adopted by the electronic device.

The smart ring is configured to collect finger pinch data between fingers, and send the collected finger pinch data to the electronic device. The smart ring may be worn on any finger of the user. The finger pinch data collected by the smart ring refers to data when the finger wearing the smart ring pinches with another finger, for example, vibration data, sound data, a rotation angle of the finger wearing the smart ring, and so on.

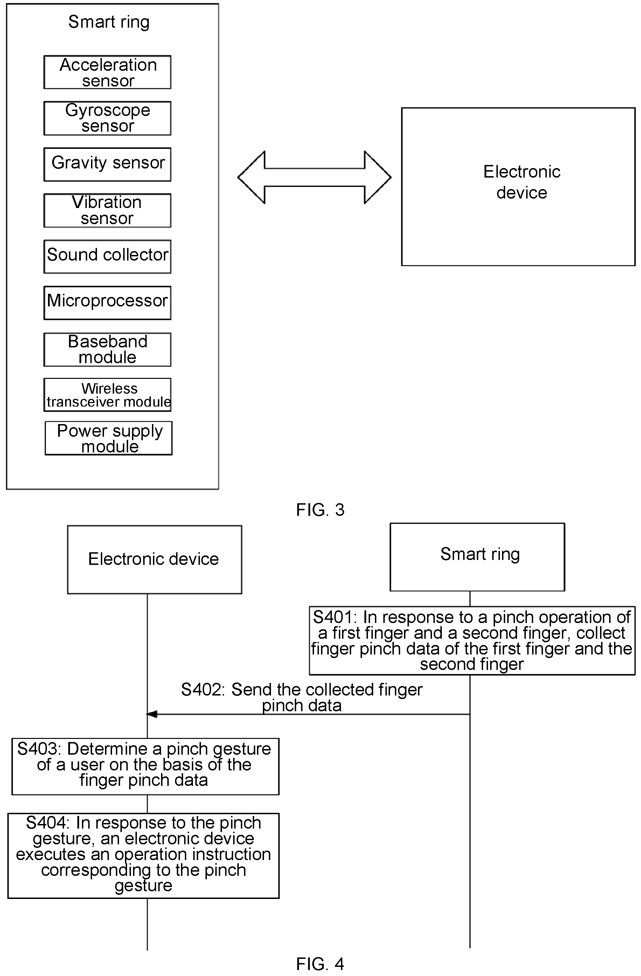

In an implementation, as shown in FIG. 3, the smart ring may include multiple sensors and multiple modules. The multiple sensors may be configured to collect rubbing data. For example, the multiple sensors may include an acceleration sensor, a gyroscope sensor, a gravity sensor, a vibration sensor, and the like. The multiple modules may include a sound collector (e.g., a microphone), a microprocessor, a baseband module, a wireless transceiver module, a power supply module, and the like.

The acceleration sensor may be configured to detect acceleration data when the finger wearing the smart ring pinches. The vibration sensor may be configured to detect vibration data when the finger wearing the smart ring pinches. The gyroscope sensor may be configured to detect a rotation angle when the finger wearing the smart ring pinches. The sound collector may be configured to detect sound data when the finger wearing the smart ring pinches. The gravity sensor may be configured to detect an angle between the finger wearing the smart ring and a horizontal plane.

It should be noted that, since the smart ring provided in the embodiments of the present disclosure may be worn on a finger and occupies a small space, the user may control the electronic device by rubbing of the finger only. Since the amplitude of the rubbing action of the finger is small, the hand of the user may operate in a clothing pocket, the operation has a micro-gesture feature and can be normally implemented in crowded occasions such as subways and shopping malls, etc.

The operation method provided in the embodiments of the present disclosure is described below with reference to the control system shown in FIG. 2 and FIG. 3. Actions, terms, and the like involved between the embodiments of the present disclosure may refer to each other, which is not limited.

FIG. 4 shows an operation method according to the embodiments of the present disclosure; as shown in FIG. 4, the operation method may include S401 to S404.

In S401: in response to a pinch operation between a first finger and a second finger, a smart ring collects finger pinch data when the first finger pinches with the second finger.

The first finger is a finger of a user wearing the smart ring, and the second finger may be any other finger of the user other than the first finger. For example, if the first finger is a thumb of the user, the second finger may be any finger among an index finger, a middle finger, a ring finger, or a little finger of the user.

In an example, in a case where rotation of the first finger is detected, the smart ring may collect the finger pinch data of the first finger through one or more sensors. For example, a rotation angle of the first finger may be collected by a gyroscope sensor, acceleration of the first finger may be collected by an acceleration sensor, an angle between a central axis of the smart ring and a gravity direction when the first finger pinches with the second finger may be collected by a gravity sensor, sound data when the first finger pinches with the second finger may be collected by a sound collector, and vibration data when the first finger pinches with the second finger may be collected by a vibration sensor.

In S402: the smart ring sends the collected finger pinch data to an electronic device. Correspondingly, the electronic device receives the finger pinch data from the smart ring.

In an example, in a case where it is detected that the first finger stops rotating or stops vibrating, the smart ring may send the collected finger pinch data to the electronic device.

In S403: the electronic device determines a pinch gesture of the user based on the finger pinch data.

The pinch gesture of the user refers to a gesture formed by a finger pinching with the first finger wearing the smart ring. For example, taking the first finger being the thumb as an example, the finger pinched with the first finger may be any one of the index finger, the middle finger, the ring finger, and the little finger. It may be understood that, since the finger pinched with the first finger is different, the corresponding pinch gesture is also different.

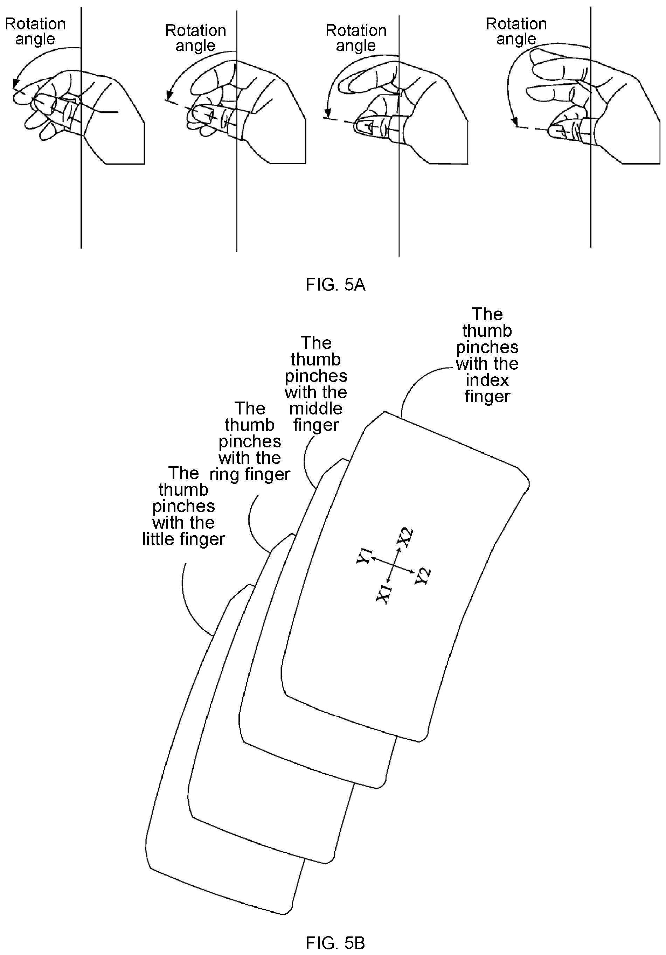

In an example, as shown in FIG. 5A, there are pinch gestures when the thumb pinches with the index finger, the middle finger, the ring finger, and the little finger. It can be seen from FIG. 5A that when the thumb pinches with different fingers, the rotation angles of the thumb are different. The rotation angle when the thumb pinches with the index finger is greater than the rotation angle when pinching with the middle finger, the rotation angle when the thumb pinches with the middle finger is greater than the rotation angle when pinching with the ring finger, and the rotation angle when the thumb pinches with the ring finger is greater than the rotation angle when pinching with the little finger.

As shown in FIG. 5B, there are trajectories of the smart ring, when the thumb pinches with the index finger, the middle finger, the ring finger, and the little finger sequentially. In FIG. 5B, the X1X2 axis is perpendicular to a central axis (thumb) of the smart ring, and the Y1Y2 axis is parallel to the central axis (thumb) of the smart ring. It can be seen from FIG. 5B that the smart ring rotates with the thumb.

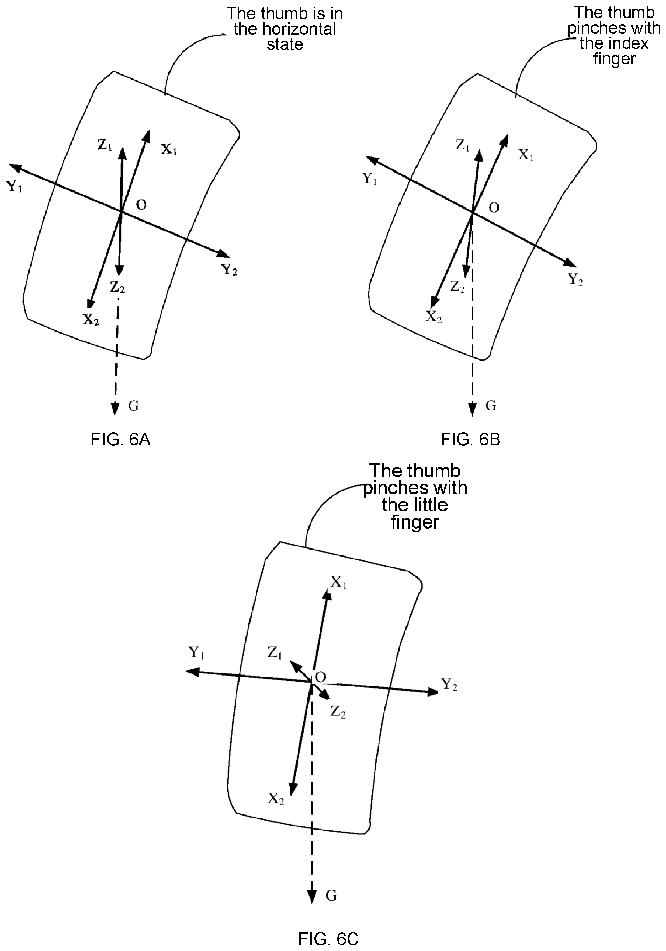

For example, as shown in FIG. 6A, it is a coordinate schematic diagram of the thumb wearing the smart ring being in a horizontal posture. In FIG. 6A, O is the origin of coordinates, the X1X2 axis is perpendicular to the central axis of the smart ring, and the Y1Y2 axis is parallel to the central axis (or the thumb) of the smart ring. The Z1Z2 axis is perpendicular to a plane formed by the X1X2 axis and the Y1Y2 axis. OG is a gravity line. Since the thumb is parallel to the horizontal plane, the plane formed by X1X2 and Y1Y2 is parallel to the horizontal plane, and the Z1Z2 axis overlaps with OG.

An angle ∠X10G between OG and the X1X2 axis, an angle ∠Y10G between OG and the Y1Y2 axis, and an angle ∠Z1OG between OG and the Z1Z2 axis may be used to represent rotation angles when the thumb pinches with other fingers.

With reference to the coordinate schematic diagram shown in FIG. 6A, as shown in FIG. 6B, it is a schematic diagram of angles between OG, and the X1X2 axis, the Y1Y2 axis and the Z1Z2 axis, when the thumb pinches with the index finger. As shown in FIG. 6C, it is a schematic diagram of angles between OG, and the X1X2 axis, the Y1Y2 axis and the Z1Z2 axis, when the thumb pinches with the little finger.

It can be seen from FIG. 6B and FIG. 6C that the angle when the thumb pinches with the little finger is different from the angle when the thumb pinches with the index finger. From this, it can be seen that when the thumb pinches with the index finger, the middle finger, the ring finger, and the little finger, the corresponding ∠LX10G, ∠Y1OG, and ∠Z1OG are all different. In this way, the electronic device may determine the finger pinched with the thumb according to ∠X10G, ∠Y10G, and ∠Z10G, and further may obtain the pinch gesture of the user.

In another example, to improve the accuracy of the pinch gesture, the electronic device may determine the pinch gesture of the user based on vibration data (such as vibration strength, waveform feature of vibration) when the first finger pinches with another finger. It may be understood that, based on human physiological characteristics, vibration data generated when different fingers pinch is different. Therefore, based on the vibration data of the finger, the electronic device may determine the finger pinched with the thumb, and further may obtain the pinch gesture of the user.

In an implementation, the electronic device may determine the pinch gesture corresponding to the finger pinch data based on a preset corresponding relationship.

The preset corresponding relationship may include a corresponding relationship between a pinch gesture when the first finger pinches with any other finger, and finger pinch data. For example, the preset corresponding relationship may include finger pinch data corresponding to a timing that the thumb pinches with the index finger, finger pinch data corresponding to a timing that the thumb pinches with the middle finger, finger pinch data corresponding to a timing that the thumb pinches with the ring finger, and finger pinch data corresponding to a timing that the thumb pinches with the little finger. The preset corresponding relationship may be preconfigured in the electronic device, or may be pre-established in the electronic device. For example, reference may be made to the description of the following embodiments, which will not be repeated here.

In S404: in response to the pinch gesture, the electronic device performs an operation instruction corresponding to the pinch gesture.

The operation instruction may refer to an instruction performed by the electronic device on an application interface. For example, the instruction may include a character input instruction, an application control instruction, a call mode control instruction, and the like.

In an example, after determining a pinch gesture corresponding to the finger pinch data, the electronic device may determine an operation instruction corresponding to the pinching finger according to the corresponding relationship. The corresponding relationship may include operation instructions corresponding to multiple pinch fingers. It may be understood that, for the first finger, since different pinch gestures of the user may refer to the first finger pinching with different fingers, the corresponding relationship may include a corresponding relationship between multiple fingers of the user and operation instructions, where the multiple fingers refer to other fingers of the user other than the first finger. The corresponding relationship may be preconfigured in the electronic device, or may be constructed by the electronic device based on a setting of the user, which is not limited.

In an implementation, for different application interfaces, the electronic device may have corresponding configuration information. The configuration information may include multiple operation instructions corresponding to the application interface. The operation instruction may be used to control the application interface or an object on the application interface. In this way, the electronic device acquires corresponding configuration information according to the currently displayed application interface, and then, based on the pinch gesture, the electronic device may select an operation instruction matched with the pinch gesture, from the multiple operation instructions included in the configuration information corresponding to the application interface, and perform the operation instruction on the application interface.

Based on the technical solution in FIG. 4, in the embodiments of the present disclosure, since the smart ring is worn on a finger of the user, the smart ring may collect finger pinch data in response to a pinch operation between the finger and another finger. The electronic device may determine a pinch gesture of the user in response to the finger pinch data collected by the smart ring, and perform an operation instruction corresponding to the pinch gesture. That is, the user may control an operation of the electronic device by the finger pinching with another finger, without directly contacting the electronic device, which improves the user experience.

The technical solution in the embodiments of the present disclosure is described below in conjunction with application scenarios.

### Scenario 1: Character input scenario.

The character input scenario may refer to a scenario of inputting a character on a text input interface. An operation instruction corresponding to the character input scenario is a character input operation instruction.

In an example, the electronic device may display a text input interface. The text input interface may be an interface of a first application. For example, the first application may be an instant messaging application, a multimedia application (such as a short video application), a text application, or the like. In response to a pinch gesture, the electronic device performing an operation instruction corresponding to the pinch gesture, may include: in response to the pinch gesture, the electronic device displaying a first text on the text input interface. For example, the first text may include a character (such as a letter, a word, a punctuation, and the like).

In an implementation, the smart ring may include a first smart ring and a second smart ring, where the first smart ring and the second smart ring are worn on different fingers of the user. For example, the first smart ring and the second smart ring are worn on the thumb of the left hand and the thumb of the right hand of the user, respectively. The electronic device may, in response to a pinch operation of the left hand and/or the right hand, display a text input control on the text input interface, and determine respective corresponding pinch gestures according to finger pinch data collected by the first smart ring and the second smart ring.

The text input control may include multiple keys, such as a letter key, a punctuation key, a number key, and the like.

In this way, the electronic device may input a text on the text input interface according to the pinch gesture of the left hand and the pinch gesture of the right hand of the user.

In an example, the electronic device may determine one or more keys from multiple keys of the text input control, in response to the pinch gesture of the left hand (that is, the pinch gesture of the finger wearing the first smart ring), and input a character of a key corresponding to the pinch gesture of the right hand among the one or more keys, on the text input interface, in response to the pinch gesture of the right hand (that is, the pinch gesture of the finger wearing the second smart ring).

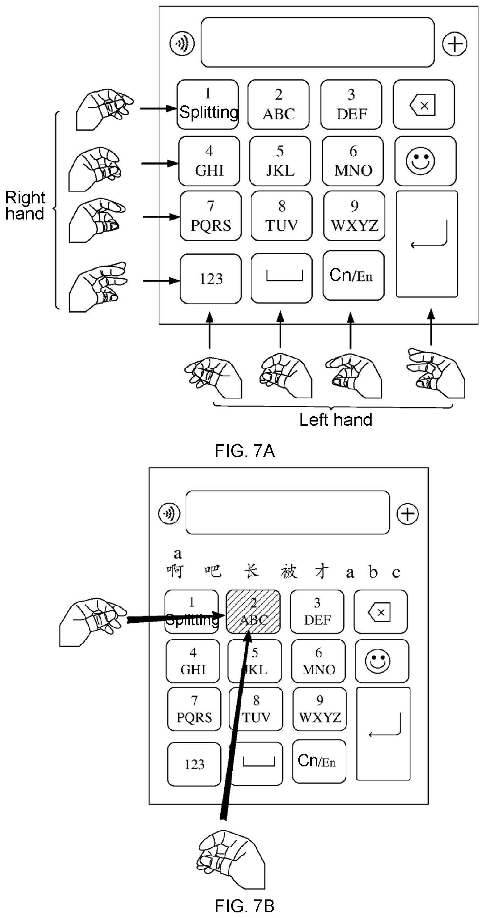

For example, a corresponding relationship between the multiple keys of the text input control and pinch gestures may be shown in FIG. 7A. Each of the right hand and the left hand of the user may include four pinch gestures (which are a pinch gesture of the thumb and the index finger, a pinch gesture of the thumb and the middle finger, a pinch gesture of the thumb and the ring finger, and a pinch gesture of the thumb and the little finger, respectively). Each of the four pinch gestures of the right hand may correspond to a row of keys. Each of the four pinch gestures of the left hand may correspond to a column of keys. The key corresponding to each pinch gesture may be shown in FIG. 7A, which will not be repeated.

In this way, the electronic device may determine a corresponding key according to the pinch gesture of the right hand and the pinch gesture of the left hand, and input a character corresponding to the key.

With reference to the corresponding relationship shown in FIG. 7A, as shown in FIG. 7B, in response to a pinch gesture of the thumb with the index finger of the right hand and a pinch gesture of the thumb with the middle finger of the right hand, the electronic device may display a character corresponding to the letter key ABC.

Based on this scenario, the electronic device may collect finger pinch data of the user based on multiple smart rings, and display a corresponding text on the text input interface based on the multiple finger pinch data, which is simple and convenient and does not require the user to directly click the mobile phone; and when using a VR device, this input method may quickly achieve input, thereby improving the experience of the user using the electronic device.

### Scenario 2: Application control scenario.

The application control scenario may refer to a scenario where multiple applications on the application interface are controlled. For example, the running, switching, and closing of the application may be controlled.

In an example, the electronic device displays a main interface, and icons of multiple applications are displayed on the main interface. The electronic device may run a first application among the multiple applications, in response to a first pinch gesture of the finger wearing the smart ring. The first application corresponds to the first pinch gesture. In the embodiments of the present disclosure, different applications correspond to different pinch gestures. In this way, the electronic device may select an application corresponding to the pinch gesture from the multiple applications, based on the pinch gesture wearing the smart ring, and run the application.

Furthermore, during a process where the electronic device runs the first application, the electronic device may close the first application or switch from the first application to a second application, in response to a second pinch gesture of the finger wearing the smart ring. In a case of closing the first application, the electronic device may re-display the main interface.

The second pinch gesture is different from the first pinch gesture. In a case where the electronic device switches from the first application to the second application, the second pinch gesture corresponds to the second application.

It should be pointed out that, in the application control scenario, the number of smart rings may be one or may be multiple. When the number of smart rings is one, the second pinch gesture being different from the first pinch gesture may mean the fingers pinched with the first finger being different. When the number of smart rings is multiple, the second pinch gesture being different from the first pinch gesture may mean the corresponding pinching fingers being different or the corresponding hands being different. For example, the first pinch gesture and the second pinch gesture may be the same finger pinching with different fingers, or may be pinch gestures of different hands. For example, the first pinch gesture may be a pinch gesture of the left hand, and the second pinch gesture may be a pinch gesture of the right hand.

In another implementation, the electronic device may also control the application, in response to a gesture change of the first finger.

For example, taking the first finger being the thumb and the electronic device running the first application as an example, in response that the thumb pinches with and then quickly separated from the second finger (i.e., the user performs a flick finger action), the electronic device may close the first application and return back to the main interface, or switch to the second application.

In another example, in response that the first finger pinches with the second finger, and then pinches with the third finger within a preset time (i.e., the user performs a finger snap action), the electronic device may close the first application or switch to the second application.

In this implementation, the second application may be an application adjacent to the first application on the main interface, or may be a preset application.

### Scenario 3: call mode control scenario.

The call mode control scenario is a scenario where a call mode of the electronic device is controlled. For example, it includes starting a call mode, ending a call mode, starting a hands-free mode and controlling call volume when the call mode is started, etc.

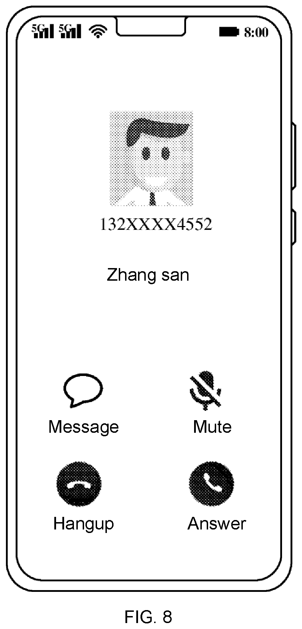

In an example, as shown in FIG. 8, in response to receiving a call request from another device, the electronic device may display a call interface.

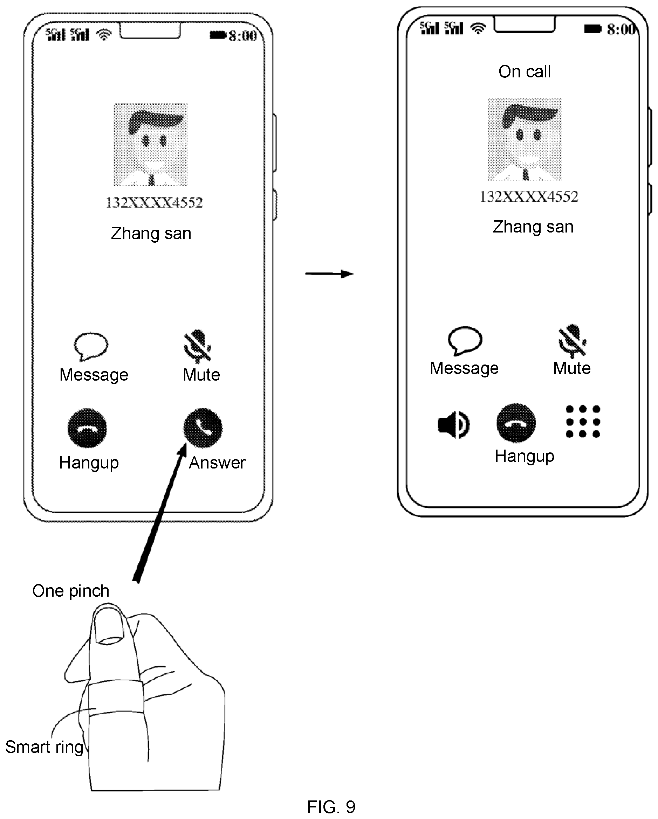

In an application scenario, based on the call interface of FIG. 8, as shown in FIG. 9, in response to a number of pinches of the first finger and the second finger being one, the electronic device may start the call mode. In this case, the second finger may be any other finger of the user.

Furthermore, in a case where the electronic device is in the call mode, the electronic device may end the call mode, in response to the number of pinches of the first finger and the second finger being two.

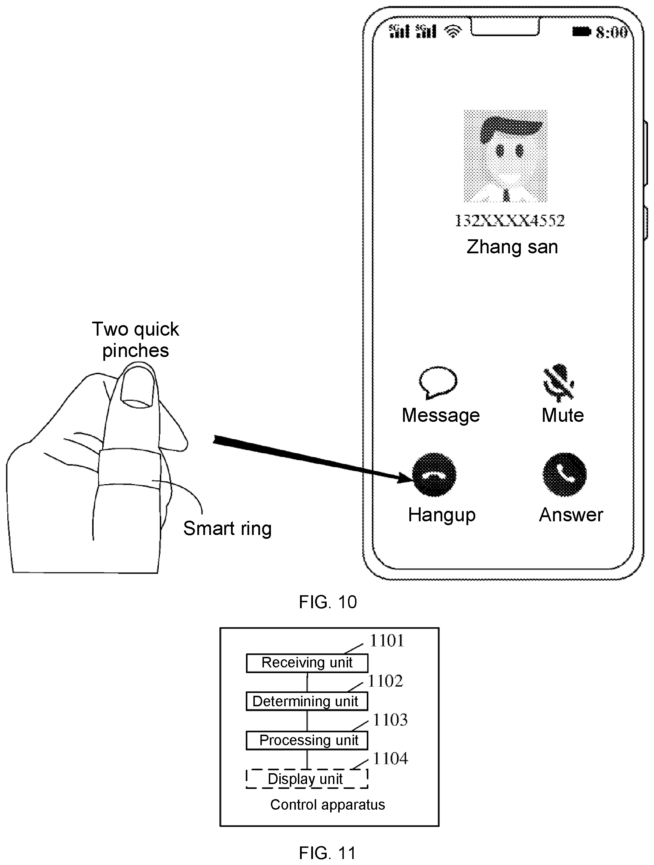

In another application scenario, based on the call interface of FIG. 8, as shown in FIG. 10, in response to the number of pinches of the first finger and the second finger being two and a time interval between the two pinches being less than a preset threshold (i.e., the first finger quickly pinches with the second finger twice), the electronic device may directly end the call mode.

In another application scenario, in response to receiving a call request from another device, the electronic device displays the call interface as shown in FIG. 8. In response to the first finger quickly pinching with the second finger quickly twice, the electronic device may start the call mode and start the hands-free mode. During the call process, the electronic device may end the call mode, in response to the first finger quickly pinching with the second finger twice again.

Based on the technical solution of this scenario, when the user is in a situation where it is inconvenient to pick up the phone to answer a call, the user may answer the incoming call and receive the call through a gesture, thereby improving the experience of the user using the electronic device.

For the above scenario 2 and scenario 3, in the embodiments of the present disclosure, the electronic device may be provided with a timer. The electronic device may count a time interval between received finger pinch data by the timer. Based on the time interval and data collected by the gravity sensor, the electronic device may determine whether the user performs a flick finger action and performs a finger snap action.

For example, when the time interval is less than a threshold, but data collected by the gravity sensor indicates that the finger has not rotated, the electronic device may determine that the user performed the flick finger action. The threshold may be set as needed and is not limited.

In another example, when the time interval is less than the threshold and data collected by the gravity sensor indicates that the finger has rotated, the electronic device may determine that the user performed the finger snap action.

In some embodiments, in order to establish the corresponding relationship between finger pinch data and pinching fingers, in the embodiments of the present disclosure, the electronic device collects finger pinch data when the first finger of the user pinches with different fingers by the smart ring, and establishes the corresponding relationship based on the finger pinched with the first finger and the finger pinch data when pinching with that finger.

In some embodiments, in order to collect finger pinch data when the first finger pinches with different fingers, the electronic device may output prompt information, in response to establishing an initial connection with the smart ring. The prompt information is used to indicate a finger to be pinched. For example, the prompt information may display, in a form of video/image, the finger to be pinched. In this way, the user may control the first finger to pinch with different fingers based on the prompt information.

In response to the first finger pinching with different fingers, the smart ring may collect corresponding finger pinch data, and send the collected finger pinch data to the electronic device; the electronic device may establish the above preset corresponding relationship based on the finger pinch data of the first finger and multiple fingers.

Furthermore, when the hand of the user is in different postures, pinch data of the first finger pinching with the same finger may be different. The above prompt information may also be used to prompt the posture of the hand. For example, the posture of the hand refers to an angle between the hand and the ground. For example, the posture includes the hand being parallel to the ground, being at a preset angle (multiple angles between 0 and 90 degrees, such as 45 degrees, 30 degrees, etc.) with the ground, and being perpendicular to the ground, etc.

The following takes the first finger as the thumb as an example to describe the collection process of finger pinch data when the thumb pinches with different fingers.

### I. Finger pinch data of the thumb and the index finger.

In an example, in response to a connection with the smart ring, the electronic device may output prompt information for prompting the thumb and the index finger to pinch. Based on the prompt information, the user may quickly pinch the thumb and the index finger, and the smart ring may collect finger pinch data when the thumb pinches with the index finger. For example, the smart ring may collect vibration data (such as vibration intensity, vibration waveform), angle data (such as *∠*X1OG, ∠Y1OG, ∠Z1OG) between three axes of the coordinate system of the smart ring and the gravity line, and send the collected finger pinch data to the electronic device. Based on the finger pinch data, the electronic device may establish a preset corresponding relationship between finger pinch data and pinching fingers.

In a case where the electronic device has been configured with the above preset corresponding relationship, the electronic device may use the finger pinch data as calibration data to calibrate the preset corresponding relationship.

Furthermore, in order to reduce error, the prompt information may also be used to prompt a number of pinches and a posture of the hand, etc.

### II. Finger pinch data of the thumb and the middle finger.

In an example, in response to a connection with the smart ring, the electronic device may output prompt information for prompting the thumb and the middle finger to pinch. Based on the prompt information, the user may quickly pinch the thumb and the middle finger, and the smart ring may collect finger pinch data when the thumb pinches with the middle finger. For example, the smart ring may collect vibration data (such as vibration intensity, vibration waveform), angle data (such as ∠X1OG, ∠Y1OG, ∠Z1OG) between three axes of the coordinate system of the smart ring and the gravity line, and send the collected finger pinch data to the electronic device. Based on the finger pinch data, the electronic device may establish a preset corresponding relationship between finger pinch data and a pinch gesture when the thumb pinches with the middle finger.

In a case where the electronic device has been configured with the above preset corresponding relationship, the electronic device may use the finger pinch data as calibration data to calibrate the preset corresponding relationship.

Furthermore, in order to reduce error, the prompt information may also be used to prompt a number of pinches of the thumb and the middle finger, and a posture of the hand, etc.

### III. Finger pinch data of the thumb and the ring finger.

In an example, in response to a connection with the smart ring, the electronic device may output prompt information for prompting the thumb and the ring finger to pinch. Based on the prompt information, the user may quickly pinch the thumb and the ring finger, and the smart ring may collect finger pinch data when the thumb pinches with the ring finger. For example, the smart ring may collect vibration data (such as vibration intensity, vibration waveform), angle data (such as *∠*X1OG, ∠Y1OG, ∠Z1OG) between three axes of the coordinate system of the smart ring and the gravity line, and send the collected finger pinch data to the electronic device. Based on the finger pinch data, the electronic device may establish a preset corresponding relationship between finger pinch data and a pinch gesture when the thumb pinches with the ring finger.

In a case where the electronic device has been configured with the above preset corresponding relationship, the electronic device may use the finger pinch data as calibration data to calibrate the preset corresponding relationship.

Furthermore, to reduce error, the prompt information may further be used to prompt a number of pinches between the thumb and the ring finger and a posture of the hand, etc.

### IV. Finger pinch data between the thumb and the little finger.

In an example, in response to a connection with a smart ring, the electronic device may output prompt information for prompting the thumb and the little finger to pinch. Based on the prompt information, the user may quickly pinch the thumb and the little finger, and the smart ring may collect finger pinch data when the thumb pinches with the little finger. For example, the smart ring may collect vibration data (such as vibration intensity, vibration waveform), angle data (such as *∠*X1OG, ∠Y1OG, ∠Z1OG) between three axes of the coordinate system of the smart ring and the gravity line, and send the collected finger pinch data to the electronic device. Based on the finger pinch data, the electronic device may establish a preset corresponding relationship between finger pinch data and a pinch gesture when the thumb pinches with the little finger.

In a case where the electronic device has been configured with the above preset corresponding relationship, the electronic device may use the finger pinch data as calibration data to calibrate the preset corresponding relationship.

Furthermore, to reduce error, the prompt information may also be used to prompt a number of pinches of the thumb and the little finger, and a posture of the hand, etc.

In the embodiments of the present disclosure, to verify the preset corresponding relationship, the electronic device may output the prompt information again, and the prompt information is used to prompt the user to pinch the first finger with each second finger. In response to a pinch operation of the first finger, the electronic device may perform an operation instruction corresponding to the pinch gesture according to the preset corresponding relationship. The electronic device may, in response to a confirmation operation of the user, store the preset corresponding relationship, or, in response to an adjustment operation, collect pinch data of the first finger with each second finger again, and adjust the preset corresponding relationship.

After the electronic device acquires the finger pinch data of the first finger with each second finger and establishes the preset corresponding relationship between finger pinch data and a pinch gesture, the electronic device, to establish a corresponding relationship between pinch gesture and an operation instruction, may also input the operation instruction corresponding to the pinch gesture, to prompt the user to pinch fingers according to the pinch gesture. The smart ring may use the collected finger pinch data to determine a matched pinch gesture based on the finger pinch data, and establish a corresponding relationship between a pinch gesture and an operation instruction. In this way, subsequently, the electronic device may determine a corresponding operation instruction according to the finger pinch data, and perform the operation instruction.

Based on the embodiments, after establishing an initial connection with the smart ring, the electronic device may acquire multiple finger pinch data based on the pinch operation of the user, and based on the multiple finger pinch data, establish a corresponding relationship between a pinch gesture and an operation instruction, so as to more accurately recognize the pinch gesture of the finger based on the corresponding relationship, subsequently.

The various solutions in the above embodiments of the present disclosure may be combined without contradiction.

It may be understood that, to implement the above functions, a control apparatus includes corresponding hardware structures and/or software modules for performing each function. Those skilled in the art should easily realise that, in combination with the algorithm steps of each example described in the embodiments of the present disclosure, the present disclosure may be implemented in a form of hardware or a combination of hardware and computer software. Whether a certain function is performed by hardware or computer software driving hardware, depends on the specific applications and design constraints of the technical solutions. Professional technicians may use different methods to implement the described functions for each specific application, but such an implementation should not be considered beyond the scope of the present disclosure.

In the embodiments of the present disclosure, the control apparatus may be divided into function modules according to the method embodiments described above, for example, each functional module may be divided corresponding to each function, or two or more functions may be integrated into a functional module. The above-mentioned integrated module may be implemented in the form of hardware or software. It should be noted that the division of modules in the embodiments of the present disclosure is illustrative, and is merely a logical functional division, and there may be other division methods in actual implementations. The following is an example of dividing each functional module corresponding to each function, for illustration.

FIG. 11 is a structural schematic diagram of a control apparatus according to the embodiments of the present disclosure, and the control apparatus may perform functions of the electronic device provided in the above method embodiments. As shown in FIG. 11, the control apparatus includes: a receiving unit 1101, a determining unit 1102, and a processing unit 1103.

The receiving unit 1101 is configured to receive finger pinch data from a smart ring, wherein the finger pinch data comprises pinch data in a case where a first finger wearing the smart ring of a user pinches with a second finger of the user.

The determining unit 1102 is configured to determine a pinch gesture of the user based on the finger pinch data.

The processing unit 1103 is configured to perform an operation instruction corresponding to the pinch gesture, in response to the pinch gesture.

In an example, as shown in FIG. 11, the control apparatus may further include a display unit 1104, where the display unit 1104 is configured to display a text input interface. The processing unit 1103 is, for example, configured to: display a first text on the text input interface, in response to the pinch gesture, wherein the first text comprises a character.

In an example, the smart ring comprises a first smart ring and a second smart ring. The first smart ring and the second smart ring are worn on different fingers of the user. The processing unit 1103 is, for example, configured to: in response to a first pinch gesture of a finger wearing the first smart ring, determine one or more keys from multiple keys; and in response to a second pinch gesture of a finger wearing the second smart ring, output a character of a key corresponding to the second pinch gesture among the one or more keys.

In an example, the display unit 1104 is further configured to display an application display interface. The application display interface includes multiple applications. The multiple applications include a first application and a second application. The processing unit 1103 is, for example, configured to: in response to a first pinch gesture, run the first application, and display a user interface of the first application; and in response to a second pinch gesture, switch from the first application to the second application, or close the first application.

In an example, the display unit 1104 is further configured to display a call interface. The processing unit 1103 is, for example, configured to: in response that a number of pinches between the first finger and the second finger is one, start a call mode; and in response that a number of pinches between the first finger and the second finger is continuous two, end the call mode.

In an example, the finger pinch data includes at least one of: an angle between the smart ring and a gravity center line in a case where the first finger pinches with the second finger; a rotation angle of the first finger; vibration data in a case where the first finger pinches with the second finger; or sound data in a case where the first finger pinches with the second finger.

In an example, the angle between the smart ring and the gravity center line comprises at least one of: an angle between a central axis of the smart ring and the gravity center line of the smart ring; an angle between a longitudinal axis of the smart ring and the gravity center line of the smart ring, wherein the longitudinal axis is perpendicular to the central axis; or an angle between a vertical axis of the smart ring and the gravity center line of the smart ring, wherein the vertical axis is an axis perpendicular to a first plane, and the first plane is a plane where the central axis and the longitudinal axis are located.

In an example, the processing unit 1103 is, for example, configured to: determine the pinch gesture corresponding to the finger pinch data according to a preset corresponding relationship, wherein the preset corresponding relationship comprises pinch data and a corresponding pinch gesture in a case where the first finger pinches with each second finger of the user.

In an example, the receiving unit 1101 is further configured to receive posture data from the smart ring. The determining unit 1102 is further configured to determine a first posture currently performed by the first finger wearing the smart ring, according to the posture data; wherein the finger pinch data is finger pinch data of the first finger in the first posture.

In an example, the first posture comprises the first finger being parallel to ground or the first finger being perpendicular to the ground.

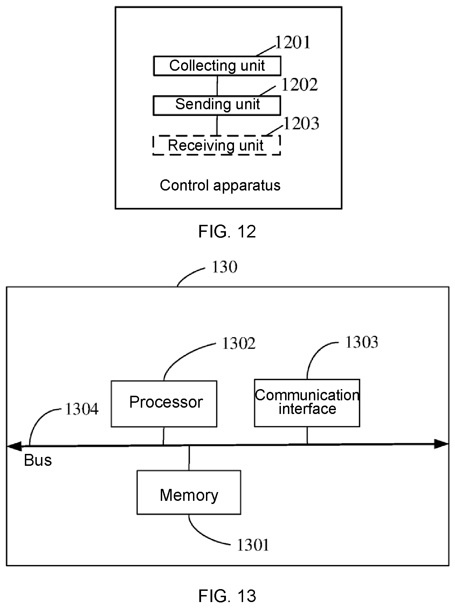

FIG. 12 is a structural schematic diagram of another control apparatus according to the embodiments of the present disclosure, and the control apparatus may perform functions of the smart ring provided in the above method embodiments. As shown in FIG. 12, the apparatus includes: a collecting unit 1201 and a sending unit 1202.

The collecting unit 1201 is configured to collect finger pinch data of a pinch operation between the first finger and a second finger of the user.

The sending unit 1202 is configured to send the finger pinch data to an electronic device, wherein the finger pinch data corresponds to a predetermined operation instruction, and the electronic device performs a preset operation in response to the operation instruction.

In an example, the finger pinch data includes at least one of: an angle between the smart ring and a gravity center line in a case where the first finger pinches with the second finger; a rotation angle of the first finger; vibration data in a case where the first finger pinches with the second finger; or sound data in a case where the first finger pinches with the second finger.

In an example, the angle between the smart ring and the gravity center line comprises at least one of: an angle between a central axis of the smart ring and the gravity center line of the smart ring; an angle between a longitudinal axis of the smart ring and the gravity center line of the smart ring, wherein the longitudinal axis is perpendicular to the central axis; or an angle between a vertical axis of the smart ring and the gravity center line of the smart ring, wherein the vertical axis is an axis perpendicular to a first plane, and the first plane is a plane where the central axis and the longitudinal axis are located.

In an example, the control apparatus further includes a receiving unit 1203, configured to: in response to establishing a communication connection with the electronic device, send posture data of a hand of the user to the electronic device, wherein the posture data is used for determining a posture of the first finger.

In an example, the posture of the first finger comprises the first finger being parallel to ground or the first finger being perpendicular to the ground.

In a case where the functions of the integrated module described above is implemented in a form of hardware, the embodiment of the present disclosure provides another structure of the control apparatus involved in the above embodiments. As shown in FIG. 13, the control apparatus 130 includes: a processor 1302, and a bus 1304. In some embodiments, the control apparatus may further include a memory 1301. In some embodiments, the control apparatus may further include a communication interface 1303.

The processor 1302 may implement or perform various exemplary logical blocks, modules and circuits described in conjunction with the embodiments of the present disclosure. The processor 1302 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 1302 may also be a combination that implements computing functions, for example, including a combination of one or more microprocessors, a combination of a digital signal processor (DSP) and a microprocessor, or the like.

The communication interface 1303 is configured to connect with other devices via a communication network. The communication network may be an Ethernet, a radio access network, a wireless local area network (WLAN), or the like.

The memory 1301 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 1301 may exist independently of the processor 1302, and the memory 1301 may be connected to the processor 1302 via the bus 1304 and is used for storing instructions or program codes. The processor 1302, when calling and executing the instructions or program codes stored in the memory 1301, is capable of implementing the operation method provided by the embodiments of the present disclosure.

In another implementation, the memory 1301 may also be integrated with the processor 1302.

The bus 1304 may be an extended industry standard architecture (EISA) bus or the like. Buses 1304 may be divided into address buses, data buses, control buses, and the like. For the convenience of representation, only one thick line is used in FIG. 13 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the operation method as described in any of the above-mentioned embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the operation method as described in any embodiment of the above-mentioned embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of the claims.

## Claims

1. An operation method, **characterized by** comprising:
receiving finger pinch data from a smart ring, wherein the finger pinch data comprises pinch data in a case where a first finger wearing the smart ring of a user pinches with a second finger of the user;
determining a pinch gesture of the user based on the finger pinch data; and
performing an operation instruction corresponding to the pinch gesture, in response to the pinch gesture.

2. The method according to claim 1, further comprising: displaying a text input interface;
wherein performing the operation instruction corresponding to the pinch gesture, in response to the pinch gesture, comprises:
displaying a first text on the text input interface, in response to the pinch gesture, wherein the first text comprises a character.

3. The method according to claim 2, wherein the smart ring comprises a first smart ring and a second smart ring, the first smart ring and the second smart ring are worn on different fingers of the user, and displaying the first text on the text input interface, in response to the finger pinch data, comprises:
in response to a first pinch gesture of a finger wearing the first smart ring, determining one or more keys from multiple keys; and
in response to a second pinch gesture of a finger wearing the second smart ring, outputting a character of a key corresponding to the second pinch gesture among the one or more keys.

4. The method according to claim 1, further comprising: displaying an application display interface; wherein the application display interface comprises multiple applications; the multiple applications comprise a first application and a second application;
wherein performing the operation instruction corresponding to the pinch gesture, in response to the pinch gesture, comprises:
in response to a first pinch gesture, running the first application, and displaying a user interface of the first application; and
in response to a second pinch gesture, switching from the first application to the second application, or closing the first application.

5. The method according to claim 1, further comprising: displaying a call interface;
wherein performing the operation instruction corresponding to the pinch gesture, in response to the pinch gesture, comprises:
in response that a number of pinches between the first finger and the second finger is one, starting a call mode; and
in response that a number of pinches between the first finger and the second finger is two, ending the call mode.

6. The method according to any one of claims 1 to 5, wherein the finger pinch data comprises at least one of:
an angle between the smart ring and a gravity center line in a case where the first finger pinches with the second finger;
a rotation angle of the first finger;
vibration data in a case where the first finger pinches with the second finger; or,
sound data in a case where the first finger pinches with the second finger.

7. The method according to claim 6, wherein the angle between the smart ring and the gravity center line comprises at least one of:
an angle between a central axis of the smart ring and the gravity center line of the smart ring;
an angle between a longitudinal axis of the smart ring and the gravity center line of the smart ring, wherein the longitudinal axis is perpendicular to the central axis; or,
an angle between a vertical axis of the smart ring and the gravity center line of the smart ring, wherein the vertical axis is an axis perpendicular to a first plane, and the first plane is a plane where the central axis and the longitudinal axis are located.

8. The method according to claim 1, wherein determining the pinch gesture of the user based on the finger pinch data, comprises:
determining the pinch gesture corresponding to the finger pinch data according to a preset corresponding relationship, wherein the preset corresponding relationship comprises pinch data and a corresponding pinch gesture in a case where the first finger pinches with each second finger of the user.

9. The method according to claim 1, further comprising:
receiving posture data from the smart ring; and
determining a first posture currently performed by the first finger wearing the smart ring, according to the posture data; wherein the finger pinch data is finger pinch data of the first finger in the first posture.

10. The method according to claim 9, wherein the first posture comprises the first finger being parallel to ground or the first finger being perpendicular to the ground.

11. An operation method, **characterized in that** the method is applied to a smart ring, a first finger of a user is selected as a finger wearing the smart ring, and the method comprises:
collecting finger pinch data of a pinch operation between the first finger and a second finger of the user; and
sending the finger pinch data to an electronic device, wherein the finger pinch data corresponds to a predetermined operation instruction, and the electronic device performs a preset operation in response to the operation instruction.

12. The method according to claim 11, wherein the finger pinch data comprises at least one of:
an angle between the smart ring and a gravity center line in a case where the first finger pinches with the second finger;
a rotation angle of the first finger;
vibration data in a case where the first finger pinches with the second finger; or,
sound data in a case where the first finger pinches with the second finger.

13. The method according to claim 12, wherein the angle between the smart ring and the gravity center line comprises at least one of:
an angle between a central axis of the smart ring and the gravity center line of the smart ring;
an angle between a longitudinal axis of the smart ring and the gravity center line of the smart ring, wherein the longitudinal axis is perpendicular to the central axis; or,
an angle between a vertical axis of the smart ring and the gravity center line of the smart ring, wherein the vertical axis is an axis perpendicular to a first plane, and the first plane is a plane where the central axis and the longitudinal axis are located.

14. The method according to any one of claims 11 to 13, further comprising:
receiving verification information, wherein the verification information is used for collecting pinch data in a case where the first finger pinches with a preset finger;
in response to a pinch operation between the first finger and the preset finger, sending calibration data to the electronic device, wherein the calibration data is used for determining the operation instruction.

15. The method according to claim 11, further comprising:
in response to establishing a communication connection with the electronic device, sending posture data of a hand of the user to the electronic device, wherein the posture data is used for determining a posture of the first finger.

16. The method according to claim 15, wherein the posture of the first finger comprises the first finger being parallel to ground or the first finger being perpendicular to the ground.

17. A control system, **characterized in that** the control system comprises a smart ring and an electronic device, the smart ring is worn on a first finger of a user, the smart ring is configured to perform the method according to any one of claims 11 to 16, and the electronic device is configured to perform the method according to any one of claims 1 to 10.

18. A smart ring, **characterized in that** the smart ring is provided with a sensor, a processor, and a communication interface;
the sensor is configured to collect finger pinch data between a first finger wearing the smart ring of a user and a second finger of the user; and
the processor is configured to send the finger pinch data to an electronic device via the communication interface.

19. The smart ring according to claim 18, wherein the sensor comprises one or more of a gyroscope sensor, a vibration sensor, an acceleration sensor, a gravity sensor, and a sound collector.

20. An electronic device, **characterized in that** the electronic device comprises a processor and a communication interface, and the processor and the communication interface support the electronic device to perform the method according to any one of claims 1 to 10.

21. A computer-readable storage medium, wherein the computer-readable storage medium comprises computer program instructions; wherein when the computer program instructions run on a computer, the computer performs the method according to any one of claims 1 to 16.
